(19) Europäisches Patentamt / European Patent Office / Office européen des brevets

(11) **EP 3 791 359 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **19724144.1**

(22) Anmeldetag: **08.05.2019**

(51) Internationale Patentklassifikation (IPC):
**G06T 5/50** *(2006.01)*     **G06T 3/40** *(2006.01)*

(52) Gemeinsame Patentklassifikation (CPC):
**G06T 5/50; G06T 3/4053;** G06T 2207/10016;
G06T 2207/10032; G06T 2207/10048;
G06T 2207/20221; G06T 2207/30181

(86) Internationale Anmeldenummer:
**PCT/EP2019/061790**

(87) Internationale Veröffentlichungsnummer:
**WO 2019/215210 (14.11.2019 Gazette 2019/46)**

(54) **KORRELATION THERMISCHER SATELLITENBILDDATEN ZUR GENERIERUNG RÄUMLICH HOCHAUFGELÖSTER WÄRMEKARTEN**

CORRELATION OF THERMAL SATELLITE IMAGE DATA FOR GENERATING THERMAL MAPS AT HIGH SPATIAL RESOLUTION

CORRÉLATION DE DONNÉES D'IMAGES SATELLITES THERMIQUES PERMETTANT DE GÉNÉRER DES CARTES THERMIQUES À RÉSOLUTION SPATIALE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018 DE 102018207265**

(43) Veröffentlichungstag der Anmeldung:
**17.03.2021 Patentblatt 2021/11**

(73) Patentinhaber: **Fraunhofer-Gesellschaft zur Förderung
der angewandten Forschung e.V.
80686 München (DE)**

(72) Erfinder: **GULDE, Max
79104 Freiburg (DE)**

(74) Vertreter: **Pfenning, Meinig & Partner mbB
Patent- und Rechtsanwälte
Joachimsthaler Straße 10-12
10719 Berlin (DE)**

(56) Entgegenhaltungen:
**US-A1- 2003 152 292**

- **SPINHIRNE J D ET AL: "Performance and results from a space borne, uncooled microbolometer array spectral radiometric imager", AEROSPACE CONFERENCE PROCEEDINGS, 2000 IEEE MARCH 18-25, 2000, PISCATAWAY, NJ, USA,IEEE, Bd. 3, 18. März 2000 (2000-03-18), Seiten 125-134, XP010518683, ISBN: 978-0-7803-5846-1**
- **GWINNER K ET AL: "The High Resolution Stereo Camera (HRSC) of Mars Express and its approach to science analysis and mapping for Mars and its satellites", PLANETARY AND SPACE SCIENCE, Bd. 126, 25. März 2016 (2016-03-25), Seiten 93-138, XP029547954, ISSN: 0032-0633, DOI: 10.1016/J.PSS.2016.02.014**

**Beschreibung**

Die vorliegende Erfindung bezieht sich auf die Bestimmung räumlich hochaufgelöster Wärmekarten unter Verwendung thermischer Satellitenbilddaten.

Eine möglichst genau bestimmte Landoberflächentemperatur (LST, *Land Surface Temperature*) ist ein wichtiger Bestandteil vieler unterschiedlicher Anwendungen, bspw. bei der Detektion von Waldbränden, der Vermessung von lokalen Maxima in der Stadttemperaturverteilung (UHI, *Urban Heat Island*), bei der Bestimmung von Vegetationsindizes in der Landwirtschaft oder bei der Modellierung des lokalen und globalen Klimas. Die großflächige und genaue Vermessung der Landoberflächentemperatur ist dabei erst mit der Nutzung von Satelliten möglich geworden.

Die Temperatur wird dabei beispielsweise nicht direkt gemessen, sondern von der Strahldichte am Detektor an Bord des Satelliten abgeleitet. Die Strahldichte $R_\lambda$ ist dabei die von einer Fläche in einer gegebenen Zeit in einem gegebenen Spektralbereich in eine gegebene Richtung ausgesendete Strahlung (Energie) und wird in Watt pro Quadratmeter Steradiant angegeben.

Der Detektor selbst nimmt ein Grauwertebild auf, bei welchem die Helligkeit eines einzelnen Pixels einer gemessenen Strahldichte zugeordnet werden kann.

Die Zuordnung von Grauwerten DN zu Strahldichte R geschieht beispielsweise durch eine lineare Gleichung der Form

$$R = a\ DN + b$$

, wobei die Konstanten *a* und *b* durch eine Kalibrierung des Detektors ermittelt werden.

Über das Planck'sche Strahlungsgesetz kann bei bekannter Wellenlänge $\lambda$ direkt auf die Temperatur T geschlossen werden über die folgende Beziehung:

$$R_\lambda = \frac{k_1}{\lambda^5 (e^{\frac{k_2}{\lambda T}} - 1)}$$

$$k_1 = 2hc^2$$

$$k_2 = hc/\sigma_B$$

Dabei ist h das Planck'sche Wirkungsquantum, c die Lichtgeschwindigkeit in Vakuum und $\sigma_B$ die Boltzmann Konstante.

Die gemessene Ausgangsgröße, aus der die Temperatur abgeleitet werden kann, kann dabei vom Typ des Detektors abhängen. Bei sogenannten Mikrobolometern wird beispielsweise entweder ein temperaturabhängiger elektrischer Widerstand gemessen oder die Temperaturänderung des Absorbers direkt durch ein Thermometer. Im ersten Fall wird auf die Temperatur durch eine vorher ermittelte funktionale Abhängigkeit zwischen Widerstand und Temperatur geschlossen.

Bei Quecksilber-Cadmium-Tellurid (englisch MCT) Detektoren handelt es sich um Halbleiterelemente, bei denen die eingefangene Energiemenge pro Pixel in guter Näherung linear mit dessen Helligkeit korreliert. Bei bekanntem Sichtfeld des Pixels und Belichtungszeit kann somit auf die Strahldichte geschlossen werden, die wie oben beschrieben mit der Temperatur zusammenhängt.

Ein weiterer Detektortyp ist der Quantentopf-Infrarot-Photodetektor (engl. *QWIP*), bei welchem ebenfalls Ladungsträger bei Infrarot(IR)-Lichteinfall freigesetzt werden, die dann einen messbaren Strom erzeugen.

Es gibt noch weitere Detektortypen, die allerdings üblicherweise gemein haben, dass die Temperatur als abgeleitete Größe bestimmt wird durch eine Veränderung leicht messbarer physikalischer Parameter (Widerstand, Spannung, etc.).

Eine generelle Herausforderung bei der Vermessung von LST durch Infrarot Kameras aus dem Weltraum ist die Erzielung einer hohen absoluten radiometrischen Genauigkeit, also Genauigkeit der gemessenen Strahlungstemperatur der Erdoberfläche. Die gemessene Temperatur sollte hierbei die tatsächliche Strahlungstemperatur des Messbereichs im Mittel möglichst genau wiedergeben. Hierbei ergeben sich Schwierigkeiten unter anderem durch Temperaturschwankungen des Detektors, den Durchgang der zu messenden IR Strahlung durch die Atmosphäre, den wellenlängen- sowie blickwinkelabhängigen Emissionsgrad der Erdoberfläche, unterschiedliche Oberflächentypen (wie Straßen, Felder, Wälder, Gebäude etc.) mit unterschiedlichen Emissionsgraden im Messbereich, die reflektierte Sonnenstrahlung und die physikalische Interpretation der Ergebnisse. Somit wird üblicherweise eine Strahlungstemperatur gemessen und es wird dann versucht, durch ein Oberflächenmodell auf die Oberflächentemperatur zu schließen.

Viele der zuvor genannten Anwendungen erfordern gleichzeitig sowohl eine hohe zeitliche als auch hohe räumliche Auflösung, um beispielsweise den Tageszyklus von UHIs oder der Evapotranspiration aufzuzeichnen. Diese Anforderung kann von derzeit existierenden sowie für die nächsten Jahre geplanten Satellitenplattformen nicht erfüllt werden.

Geostationäre Satelliten wie GOES oder Meteosat besitzen zwar sehr hohe zeitliche Wiederholraten (5 Minuten für MSG SEVIRI im *Rapid Scanning Mode*) und eine hohe radiometrische Präzision, aber begrenzte räumliche Auflösung mit projizierten Pixelgrößen von mehreren Quadratkilometern.

Räumlich hochauflösende Plattformen wie Landsat-7 oder 8 (ETM+, TIRS) und Terra (ASTER) bieten zwar räumliche Auflösungen von etwa 60 - 120 m, ermöglichen eine globale Abdeckung allerdings nur mit einer Wiederholrate von etwa zwei Wochen.

Generell sind hochwertige Kalibrierungsmethoden zur präzisen Messung der Oberflächentemperatur an Bord des Satelliten sehr aufwendig und bisher nur innerhalb großer Satelliten zu realisieren. Dabei haben diese Plattformen den Nachteil, dass bei hoher räumlicher Auflösung (bspw. Landsat 7 und 8) in niedrigen Orbits sehr lange Zeit vergeht, bis dasselbe Gebiet wieder beobachtet werden kann und eine Verwendung einer Konstellation aus einer Vielzahl solcher Systeme einen extremen finanziellen Aufwand bedeutete. Weiter entfernte Plattformen (Meteosat, GEOS) leiden wie oben beschrieben unter der Problematik schlechter räumlicher Auflösung.

Es existieren daher mehrere Ansätze radiometrisch präzise Thermaldaten mit hoher räumlicher und optional auch hoher zeitlicher Auflösung zu generieren. Die Ansätze haben alle gemein, vorhandene präzise thermische Satellitendaten großer Plattformen wie Meteosat und Landsat, die über aufwendige Kalibrierungsmethoden an Bord verfügen, mit räumliche höher aufgelösten Hilfsdaten zu kombinieren. Ein solches Downsampling von Thermaldaten kann genutzt werden, räumlich höher aufgelöste Thermalbilder zu erhalten und diese beispielsweise im Rahmen einer außerdem zeitlich hochaufgelösten Zeitreihe zu verwenden.

Es gibt zurzeit zwei Verfahrenstypen, diese räumliche Auflösungserhöhung zu erreichen. Beim thermalen Schärfen (TSP, *Thermal SharPening*) werden hochaufgelöste physikalische Umgebungsmodelle genutzt, um auf Temperaturen in einem rechteckigen Subpixel-Netz zu schließen. Dies können beispielsweise Karten mit genauen Angaben zu Emissionskoeffizienten oder der lokalen Albedo sein. Dabei wird angenommen, dass der aufgenommene, grobe Temperaturpixel als Linearkombination seiner Subpixelkonstituenten ausgedrückt werden kann. Diese werden in Klassen je nach Parametersatz (bspw. "Wald", "Wiese", Straße", "Gebäude") eingeteilt und beispielsweise über multilineare Regression oder sequenzielle Monte-Carlo-Methoden korreliert.

Der Emissionskoeffizient $\varepsilon$ bestimmt dabei den Zusammenhang zwischen der gemessenen Strahlungstemperatur $T_S$ und der kinetischen Oberflächentemperatur $T_O$ eines Körpers über den folgenden Zusammenhang:

$$T_S = \epsilon T_O$$

Es wird üblicherweise bei Fernerkundungsmethoden das Produkt aus Temperatur und Emissionskoeffizient gemessen. Da sich in einem Band beide Größen nicht gleichzeitig unabhängig voneinander bestimmen lassen, ist das Problem dann unterbestimmt. Dementsprechend werden weitere Informationen benötigt. Es gibt verschiedene Möglichkeiten, den Emissionskoeffizienten zu bestimmen.

Zum einen über eine Karte des beobachteten Gebiets mit detaillierten Informationen zum Landschaftstyp (CORINE ist eine solche Karte für Europa, die etwa alle 2 Jahre neu erstellt wird). Ist der Landschaftstyp bekannt, können aus sogenannten spektralen Bibliotheken (Gillespie, A. R, Rokugawa, S, Matsunaga, T, Cothern, J. S, Hook, S and Kahle, A. B. 1998. A Temperature and Emissivity Separation algorithm for Advanced Spaceborne Thermal Emission and Reflection radiometer ASTER images. IEEE Transactions on Geoscience and Remote Sensing, 36: 1113-1126) die dazugehörigen Emissionskoeffizienten (oder eng damit zusammenhängend die Reflexionskoeffizienten) ausgelesen und zugeordnet werden.

Alternativ kann bei Verwendung mehrerer spektraler Bänder (mindestens 3) eine Separation von Emissionskoeffizienten und Temperatur erfolgen. Für mit Vegetation bedeckte Gebiete wird auch häufig über den Normalized Difference Vegetation Index (NDVI) auf den Emissionskoeffizienten geschlossen (Valor, E. and Caselles, V. (1996) Mapping Land Surface Emissivity from NDVI: Application to European, African and South American Areas. Remote Sensing of Environment, 57, 167-184. http://dx.doi.org/10.1016/0034-4257(96)00039-9 ).

Spinhirne et al: "Performance and results from a space borne, uncooled microbolometer array spectral radiometric imager", Aerospace Conference Proceedings, 2000, Seiten 125 - 134, ISBN: 978-0-7803-5846-1 diskutiert die Leistungsfähigkeit von Infrarot-Bildgebern und ihre Kalibration an Bord eines Space Shuttles, sowie die Messung von Oberflächentemperaturen von Gelände, Wolken und Ozean.

US 2003/152292 A1 diskutiert die Erstellung hoch- und niederaufgelöster Bilder von Infrarotbildern im Weltraum. Ein oder mehrere Satelliten beobachten ein Gebiet mit einer ausgewählten Wiederholungsüberdeckung für landwirtschaftliche Zwecke.

Gwinner et al.: "The High Resolution Stereo Camera (HRSC) of Mars Express and ist approach to science analysis and mapping for Mars and ist satellites", Planetary and Space Science, Bd. 126, Seiten 93 - 138, ISSN: 0032-0633 diskutiert hochauflösende Kartografie der Marsoberfläche. Multispektrales Stereo-Bildmaterial wird in mehreren Orbits aufgenommen, u.a. um digitale Modelle eines Gebiets zu generieren. Die Sensoren können radiometrisch und geometrisch kalibriert sein.

Die Anwendung von TSP kann bei moderater Auflösungserhöhung (etwa Faktor 10) und guter Datenlage zu relativ präzisen Ergebnissen führen mit mittleren LST Fehlern (RMSE, *Root Mean Square Error*) von etwa 2 - 3 K. Die Ergebnisse sind dabei umso genauer, desto weniger Klassen und Subkomponenten gewählt werden. Bei realer Anwendung auf Meteosat Daten liegt der Faktor der Auflösungserhöhung (*downsampling*)jedoch je nach Anwendungsfall bei etwa 40 - 100 und es existieren sehr viele Klassen innerhalb eines groben Pixels (Pixelgröße von SEVIRI minimal 9.6 km$^2$, über Zentraleuropa etwa 15 km$^2$). Der mittlere Fehler liegt hier im besten Fall bei etwa 5 K, wobei einzelne Ausreißer jedoch durchaus um 20 K und mehr abweichen können.

Alternativ wird versucht durch spektrale Entmischung (TUM, *Temperature Un-Mixing*) auf irregulär geformte Subpixelkomponenten zu schließen. Bei diesem Verfahren werden bspw. mehrere thermische Bänder parallel analysiert, um eine Auflösungserhöhung der Ausgangsdaten zu erreichen. Alternativ können auch zeitliche Bildfolgen der gleichen Region, verschiedene Blickwinkel oder unterschiedliche Auflösungen in weiteren, synchron aufgenommenen thermischen Bändern verwendet werden, um die räumliche Auflösung einer Region zu verbessern. Es gibt allerdings wenige Satellitensensoren, die Regionen aus mehreren Blickwinkeln aufnehmen, der benötigte Emissionskoeffizient ist schwierig zu bestimmen bei der Verwendung von mehreren Bändern und zeitliche Abfolgen sind schwer zu parametrisieren, wenn die Oberflächenparameter zeitlich variabel sind.

Preisgünstigere Kleinsatelliten mit hoher räumlicher Auflösung sind hingegen nicht in der Lage, Bilder mit hoher radiometrischer Präzision aufzunehmen. Beim Einsatz kleinerer Satellitenplattformen, bspw. Piko- oder Nanosatelliten, basieren Ansätze zur Erstellung räumlich hochaufgelöster Thermaldaten deshalb zumeist auf der Kalibrierung von räumlich hochaufgelösten IR-Bildern zusammen mit Referenzobjekten bekannter Temperatur. Durch eine Erkennung der Referenzobjekte innerhalb des IR-Bilds kann dieses dann entsprechend kalibriert werden. Alternativ wird ein zweiter Sensor genutzt, der präzise Temperaturinformationen eines Bildausschnitts liefert. Der Einsatz gekühlter Detektoren auf kleinen Satelliten wird ebenfalls vorgenommen, reicht aber zumeist nicht aus, um die Temperatur auf weniger als einige Kelvin genau zu bestimmen.

Es besteht daher ein Bedarf an einfachen, kostengünstigen Lösungen zur Erstellung räumlich hochauflösender Thermalbilder mit hoher radiometrischer Präzision, sowie an der Erstellung zeitlich hochaufgelöster Zeitreihen bestehend aus diversen räumlich hochaufgelösten Thermalbilder hoher radiometrischer Präzision.

Die vorliegende Schutzrechtsanwendung löst diese Aufgabe gemäß den unabhängigen Ansprüchen. Vorteilhafte Weiterentwicklungen sind außerdem in den abhängigen Ansprüchen und dieser Beschreibung beschrieben.

Die vorgeschlagene Lösung besteht dabei in der Nutzung von Kleinsatelliten zur Erstellung räumlich hoch aufgelöster Wärmekarten der Erdoberfläche mit gleichzeitig hoher radiometrischer Präzision. Das vorgestellte Prinzip beruht dabei auf dem Zusammenschnitt von 1) mit Satelliten aufgenommenen Thermaldaten hoher absoluter Messgenauigkeit, aber niedriger räumlicher Auflösung mit 2) zeitlich und räumlich koregistriert, also zeitlich synchron und vom selben Gebiet, aufgenommenen Thermaldaten einer zweiten Satellitenplattform mit geringerer Messgenauigkeit aber deutlich höherer räumlicher Auflösung.

Messwerte sind hierbei beispielsweise die Grauwerte eines Photosensors, die einer physikalischen Strahldichte (und damit Strahlungstemperatur) zugeordnet werden können, der elektrische Widerstand oder eine elektrische Spannung, der direkt einer Temperatur zugeordnet werden können oder weitere zur berührungslosen Bestimmung der Temperatur verwendeten physikalischen Messgrößen.

Das hier beschriebene Verfahren sowie die Vorrichtung kombinieren die Vorteile beider Messungen und resultiert somit sowohl in einer hohen Temperaturpräzision als auch in einer hohen räumlichen Auflösung. Dabei können durch die üblichen Verfahren zur räumlichen Aufschließung (*disaggregation*) satellitengestützter LST entstehenden Unsicherheiten zumindest in großen Teilen vermieden werden. Weiterhin wird ein Verfahren zum Erstellen einer Zeitreihe räumlich hochaufgelöster Wärmekarten sowie ein Computerprogrammprodukt zur Durchführung der beschriebenen Verfahren beschrieben.

Das beschriebene Verfahren ist ausgelegt zur Bestimmung der Wärmekarte eines Gebietes, vorzugsweise zur Bestimmung einer räumlich hoch aufgelösten Wärmekarte mit einer hohen Messgenauigkeit, wie beispielsweise einer hohen Temperaturgenauigkeit.

Das Verfahren umfasst ein Empfangen eines ersten Wärmebildes sowie ein Empfangen eines zweiten Wärmebildes, wobei die Wärmebilder durch unterschiedliche Plattformen zur Verfügung gestellt werden und daher unterschiedliche Eigenschaften haben.

Ein Wärmebild ist dabei eine grafische Repräsentation einer physikalischen Einheit über eine Region und kann verschiedene physikalische Einheiten darstellen, bspw. eine Strahldichte (W/m$^2$sr) oder eine Temperatur (K).

Das erste Wärmebild, welches durch eine Aufnahmevorrichtung eines ersten Satelliten aufgenommen wird, hat eine hohe radiometrische Präzision aber eine geringe räumliche Auflösung. Das erste Wärmebild zeigt die aufgenommene Wärmestrahlung einer ersten Landschaft, die das Gebiet umfasst, wobei das erste Wärmebild Pixel umfasst, die dem Gebiet räumlich zugeordnet sind und das erste Wärmebild dem Gebiet pixelweise jeweils einen gemessenen ersten Temperaturwert, Strahldichte, oder Wert einer anderen radiometrischen Messgröße zuordnet.

Das zweite Wärmebild, welches durch eine Aufnahmevorrichtung eines zweiten Satelliten oder, alternativ, einer Drohne, eines Ballons oder eines anderen bemannten oder unbemannten Flugobjekts aufgenommen wird, hat eine geringere radiometrische Präzision aber eine höhere räumliche Auflösung, verglichen mit dem ersten Wärmebild. Das zweite Wärmebild zeigt die aufgenommene Wärmestrahlung einer zweiten Landschaft, die das Gebiet umfasst, wobei das zweite Wärmebild Pixel umfasst, die dem Gebiet räumlich zugeordnet sind und das zweite Wärmebild dem Gebiet pixelweise jeweils einen gemessenen zweiten Temperaturwert zuordnet.

Das "Gebiet", für das die Wärmekarte bestimmt werden soll kann hierbei sowohl ein kleiner Teil der Landschaft, beispielsweise ein einzelnes Gebäude oder Feld sein, oder auch ein größerer Teil der Landschaft, die auf den Wärmebildern gezeigt ist, wie beispielsweise ein Dorf, ein Stadtteil oder auch eine ganze Stadt. Das "Gebiet" kann sich somit über diverse Pixel zumindest des zweiten Wärmebildes erstrecken.

Den einzelnen Pixeln der beiden Wärmebilder können jeweils unterschiedliche Werte zugeordnet sein. Außerdem ist die räumliche Auflösung des zweiten Wärmebildes höher als die räumliche Auflösung des ersten Wärmebildes, so dass jeweils eine Vielzahl von Pixeln des zweiten Wärmebildes einem Pixel des ersten Wärmebildes räumlich zugeordnet sind.

Das erste und das zweite Wärmebild wurden weiterhin zeitlich synchron oder mit nur einem geringen zeitlichen Versatz unterhalb einer festgelegten Schranke von vorzugsweise wenigen Minuten, beispielsweise 10 Minuten aufgenommen. Die zeitliche Toleranz ist dabei gegeben durch die charakteristische Zeitspanne, mit der sich die Temperatur bzw. die Abstrahlungseigenschaften im Gebiet signifikant ändern. Diese Zeitspanne kann in Abhängigkeit von den Rahmenbedingungen, wie den Wetterbedingungen, sowie vom beabsichtigten Anwendungsfall unterschiedlich sein.

Die hohe radiometrische Präzision und somit Temperaturgenauigkeit oder, allgemeiner, Messgenauigkeit des ersten Wärmebildes resultiert beispielsweise aus der Aufnahmevorrichtung des ersten Satelliten, der vorzugsweise ein großer Satellit ist, beispielsweise ein Wettersatellit, und der über aufwendige Kalibrierungstechnik verfügt, beispielsweise unter Verwendung von speziell temperierten Schwarzkörpern oder Sensoren. Satelliten, die Bilder mit hoher Messgenauigkeit, beispielsweise Temperaturgenauigkeit, aufnehmen können, sind aus dem Stand der Technik bekannt, allerdings ist die notwendige Kalibrierungstechnik sehr kostenintensiv und zu groß für kleine Satelliten wie beispielsweise Piko-, Nano-, oder Mikrosatelliten. Der erste Satellit kann ein geostationärer Satellit sein, was weiterhin eine hohe zeitliche Wiederholrate der aufgenommenen Wärmebilder ermöglicht. Allerdings sind geostationäre Wettersatelliten aufgrund ihrer großen Entfernung zur Erde nicht in der Lage räumlich hoch aufgelöste Bilder aufzunehmen. Somit liegt die räumliche Auflösung des ersten Wärmebildes im Bereich von einem bis mehreren Quadratkilometern pro Pixel.

Alternativ kann der erste Satellit ein großer Satellit in einem niedrigen Erdorbit sein, wie beispielsweise durch die Landsat Satelliten bekannt. Durch einen derartigen Satelliten, der ebenfalls über Kalibrierungstechnik zur Aufnahme von Wärmebildern mit hoher radiometrischer Präzision konfiguriert ist, ist eine deutlich bessere räumliche Auflösung verglichen mit einem geostationären Satelliten möglich. Allerdings ist auch hierbei die räumliche Auflösung für viele Anwendungen noch verbesserungswürdig. Weiterhin können derartige große Satelliten in einem niedrigen Erdorbit denselben Teilausschnitt der Erdoberfläche nur in einem Abstand von mehreren Tagen bis mehreren Wochen aufnehmen, wodurch eine Aufnahme zu einem Wunschzeitpunkt oder eine Zeitreihe mehrerer Aufnahmen nicht oder nur mit einer sehr geringen zeitlichen Auflösung oder durch Kombination mehrerer derartiger Satelliten möglich ist. Da große Satelliten aber sehr kostenintensiv sind, ist es finanziell sehr aufwendig die für eine bessere Zeitgenauigkeit notwendige Vielzahl von großen Satelliten in einem niedrigen Erdorbit (mit einer Entfernung unter 2000 km zur Erde) zu verwenden.

Das zweite Wärmebild kann durch einen näher an der Erde kreisenden Kleinsatelliten deutlich unter 1000 kg oder unter 500 kg, wie einen Pikosatelliten bis ca. 1 kg, einen Nanosatelliten bis ca. 10-15 kg oder einen Mikrosatelliten bis ca. 100 kg aufgenommen werden. Durch die Erdnähe kann eine höhere räumliche Auflösung ermöglicht werden. Derartige Satelliten kreisen in einem niedrigeren Erdorbit mit einem Abstand von typischerweise zwischen 300 und 1000 km Abstand zur Erdoberfläche, beispielsweise zwischen 500 und 800 km Abstand zur Erdoberfläche. Im Allgemeinen kreisen kleinere Satelliten und Satelliten mit kürzerer Lebensdauer näher an der Erde als größere Satelliten und/oder Satelliten mit höherer Lebensdauer. Allerdings sind bei den um mehrere Größenordnungen kostengünstigeren Kleinsatelliten (mit einem Stand von 2018 liegen die Kosten für einen Geosatelliten im Bereich von ca. 1000 Millionen Euro, während ein Nanosatellit ungefähr zwischen 1 und 10 Millionen Euro kostet) die technischen Möglichkeiten und der Platz für aufwendige Technik wie beispielsweise Kalibrierungstechnik an Bord begrenzt, so dass die durch einen Kleinsatelliten gemessenen Wärmebilder unter Umständen signifikant von den tatsächlichen Messgröße, wie Temperaturen oder Strahldichten abweichen können. Abweichungen können beispielsweise durch Temperaturschwankungen des Infrarotsensors, der zur Aufnahme verwendet wird, entstehen. Da Kleinsatelliten deutlich näher an der Erde kreisen als beispielsweise Wettersatelliten, können die Wärmebilder durch einen Kleinsatelliten mit einer deutlich höheren Auflösung von Kantenlängen der individuellen Pixel unter 100 m, vorzugsweise unter 50 m, zwischen 30 m und 50 m oder unter 30m aufgenommen werden. Bei Nachbearbeitung der aufgenommenen Bilder ist, beispielsweise durch Verwendung oder Überlagerung mehrerer aufgenommener Bilder auch eine noch höhere räumliche Auflösung, beispielsweise unter 20 m oder unter 10 m möglich. Der zweite Satellit, mit dessen Aufnahmevorrichtung das zweite Wärmebild aufgenommen wurde, ist hierbei im Allgemeinen in einem niedrigen Erdorbit, insbesondere in einem niedrigeren Erdorbit als der erste Satellit, wodurch durch einen einzelnen Satelliten nur eine geringere Wiederholfrequenz, von zumindest mehreren Stunden oder Tagen oder beispielsweise 2 - 4 Wochen bei einer relativ hohen Auflösung von beispielsweise etwa 100 m, für die Aufnahmen eines Gebietes möglich ist. Die Wiederholfrequenz kann hierbei als eine Funktion der Auflösung betrachtet werden. Wenn räumlich hochaufgelöste Bilder aufgenommen werden, so wird durch die begrenzte Detektorgröße notwendigerweise ein kleines Gebiet aufgenommen. Dementsprechend dauert es relativ lange, bis dieses Gebiet wieder abgedeckt wird (es sei denn, der Orbit wurde genau so eingestellt, dass zu Lasten der Gesamtabdeckung der Erdoberfläche ein bestimmtes Gebiet häufiger überflogen wird). Somit ist die Wiederholfrequenz (*revisit time*) eine Funktion des Sichtbereichs des Detektors und kann somit direkt mit dem Auflösungsvermögen gekoppelt sein.

Das Verfahren zur Bestimmung der Wärmekarte umfasst weiterhin das Bestimmen eines Messgrößenversatzes, wie beispielsweise eines Temperaturversatzes, einer ersten, dem Gebiet räumlich zugeordneten Pixelgruppe des zweiten Wärmebildes, wobei die erste Pixelgruppe eine Vielzahl von Pixeln umfasst. Wie oben beschrieben, ist die absolute Messgenauigkeit, beispielsweise Temperaturgenauigkeit, des zweiten Wärmebildes gering und kann, handelt es sich bei der Messgröße bspw. um eine Temperatur, um mehrere Grad, beispielsweise über 2 K, oder, häufiger, über 5 K oder sogar über 10-20 K, von der Realität abweichen. Es kann allerdings davon ausgegangen werden, dass die relativen Messwerte, beispielsweise relative Temperaturwerte, des zweiten Wärmebildes eine hinreichende Genauigkeit aufweisen, insbesondere die relative Messwerte benachbarter Pixel oder von Pixeln die sich in der Nähe voneinander befinden, beispielsweise innerhalb weniger Pixel voneinander.

Es kann somit durch einen Vergleich eines Messgrößenmittelwertes, beispielsweise des Temperaturmittelwerts, für die erste Pixelgruppe mit einem Wert derselben Messgröße der Referenzpixel des ersten Wärmebildes ein Messgrößenversatz für die erste Pixelgruppe bestimmt werden. Es ist hierbei beispielsweise auch möglich benachbarte Pixel sowohl bezüglich des ersten Wärmebildes (also benachbarte Pixel des mindestens einen ersten Pixels) als auch bezüglich des zweiten Wärmebildes (also benachbarte Pixel der ersten Pixelgruppe) bei der Bestimmung des Messgrößenversatzes mit zu berücksichtigen. Die "gröberen" Referenzpixel des ersten Wärmebildes können hierbei als Linearkombination oder gewichtete Summe der ersten Pixelgruppe ausgedrückt werden. Die Pixel der ersten Pixelgruppe werden bei der Berechnung des Mittelwertes mit der Gewichtung ihres Flächenanteils berücksichtigt. Somit können auch unterschiedlich große Pixel berücksichtigt werden. Die Messwerte können entweder, für jeden Pixel, skalare Messgrößen sein, oder es ist möglich, dass gleichzeitig mehrere Werte erfasst werden, so dass dann die einzelnen Messwerte in Vektorform vorliegen.

Das Verfahren umfasst weiterhin noch den Schritt des Bestimmens korrigierter absoluter Messwerte der dem Gebiet zugeordneten Pixel der ersten Pixelgruppe basierend auf den zweiten gemessenen Messwerten der Pixel der ersten Pixelgruppe sowie dem Messwertversatz.

Das Bestimmen der korrigierten absoluten Messwerte für die Pixel der ersten Pixelgruppe erfolgt vorzugsweise durch eine Addition der zweiten gemessenen Messwerte und des zuvor bestimmten Messwertversatzes.

Das Verfahren beinhaltet außerdem einen Schritt zur Bestimmung oder Generierung der räumlich hochaufgelösten Wärmekarte mit hoher radiometrischer Präzision auf Grundlage der korrigierten absoluten Messwerte.

Beispielsweise handelt es sich bei der Messgröße um eine Temperatur, gemessen z.B. in Kelvin. In diesem Fall wird dann der Temperaturversatz zwischen den beiden Wärmebildern bestimmt. Es kann sich aber auch um eine Strahlgröße handeln, gemessen z.B. in Watt pro Quadratmeter und pro Steradiant, um einen elektrischen Widerstand z.B. gemessen in Ohm, oder um eine Spannung gemessen z.B. in Volt.

Somit kann durch eine Kombination zweier aufgenommener Wärmebilder unterschiedlicher Eigenschaften eine deutlich verbesserte Wärmekarte des Gebietes erstellt werden.

Durch das Verfahren wird insbesondere, beispielsweise mittels Infrarot, die Strahlungstemperatur der Landoberfläche bestimmt. Je nach Anwendung kann zusätzlich eine genaue Bestimmung der Landoberflächentemperatur aus der durch die bestimmte Wärmekarte gegebenen Strahlungstemperatur unter Zuhilfenahme eines Emissionsgrads der jeweiligen Oberfläche erfolgen, in Abhängigkeit von der Art der jeweiligen Oberfläche.

Es ist dabei zu beachten, dass durch Infrarotsensoren zunächst spezifische Intensitäten bzw. Strahldichten gemessen werden, die zum Vergleich der gemessenen Strahldichten des ersten und zweiten Wärmebildes über den jeweiligen möglichst deckungsgleichen Flächen integriert werden. Aus den gemessenen Werten kann dann eine Strahlungstemperatur bestimmt werden, die für die jeweiligen Flächen gemittelt werden kann.

Hierzu wird ein Pixel beispielsweise mit einer bestimmten Energiemenge im IR beleuchtet und hat damit eine bestimmte Helligkeit. Durch die bekannte Pixelantwort (z.B. im Labor vor dem Start gemessen), die normalerweise im zu betrachtenden Bereich nahezu linear ist, kann nun von der Pixelhelligkeit auf physikalische Einheiten geschlossen werden, bspw. mittels einer Ausgleichsfunktion oder einer Umsetzungstabelle. In diesem Fall ist das die spektrale Strahldichte (*spectral radiance*, W/(m$^2$ sr μm)). Die (Strahlungs-) Temperatur ergibt sich dann direkt aus dem Planck'schen Strahlungsgesetz. Die Oberflächentemperatur kann dann aus dieser sowie einem Emissionskoeffizienten bestimmt werden.

Durch die hohe räumliche Auflösung sowie hohe radiometrische Präzision der durch das beschriebene Verfahren generierten Wärmebilder ist die Bestimmung der Oberflächentemperatur mit deutlich reduziertem Aufwand möglich, verglichen mit denen im Stand der Technik bekannten Verfahren.

Vorzugsweise ist der ersten Pixelgruppe des zweiten Wärmebildes genau ein Pixel des ersten Wärmebildes räumlich zugeordnet. In diesem Fall erfolgt das Bestimmen des Messwertversatzes der ersten Pixelgruppe des zweiten Wärmebildes vorzugsweise durch eine, möglicherweise gewichtete, Summe relativer Messwerte der ersten Pixelgruppe des zweiten Wärmebildes gegenüber dem ersten gemessenen Messwert des der ersten Pixelgruppe des zweiten Wärmebildes räumlich zugeordneten Pixels des ersten Wärmebildes.

Diese Berechnung erfolgt unter der Annahme, dass durch den mit hoher Messgenauigkeit gemessenen Wert des ersten Pixels des ersten Wärmebildes ein Mittelwert der Messwerte der Pixel der ersten Pixelgruppe des zweiten Wärmebildes bekannt ist. Damit kann dann der Messwertversatz $\Delta T$ herausgerechnet werden. Dieser ist gegeben durch die Differenz der Mittelwerte des, einerseits, gemessenen Messwerts des ersten Pixels des ersten Wärmebildes gegenüber, andererseits, den gemessenen Messwerten der Pixel der ersten Pixelgruppe des zweiten Wärmebildes.

$$\Delta T = T_A(x,y) - \frac{1}{N}\sum_{(i,j)\,in\,T_A(x,y)} w(i,j)\, T_B(i,j) \qquad (1)$$

Dabei gilt

$$\sum_{(i,j)\,in\,T_A(x,y)} w(i,j) = N. \qquad (2)$$

$T_A(x,y)$ ist die aufgenommene Messgröße des ersten Wärmebildes des Pixels $(x,y)$ und $T_B(i,j)$ die der Messung des zweiten Wärmebildes in allen Pixeln $(i,j)$, die innerhalb der ersten Pixelgruppe liegen, wobei $w(i,j)$ den jeweiligen Flächenanteil des Pixels $(i,j)$ an der dem ersten Pixel räumlich zugeordneten Gesamtfläche wiedergibt. Somit ist $w(i,j)$ = 1, wenn der Pixel (i,j) komplett in der Gesamtfläche des ersten Pixel enthalten ist.

Wird als Messwert die Temperatur gewählt, so gilt dieser lineare Ansatz in guter Näherung für einen mittleren auf der Erde zu findenen Temperaturbereich um die 300 K, wie er normalerweise auf einem einzelnen Wärmebild zu finden ist mit einer Differenz zwischen maximaler und minimaler aufgenommener Temperatur von einigen zehn Kelvin, bspw. 20 K oder 30 K.

Werden stattdessen die Strahldichten als Messgröße gewählt, so entspricht die mathematische Formulierung dem Energieerhaltungssatz und sie gilt exakt.

Es ist weiterhin vorzugsweise möglich, dass das Verfahren nach dem Berechnen der korrigierten absoluten Temperaturwerte der Pixel der ersten Pixelgruppe, ein optionales Nachbearbeiten der Pixel der ersten Pixelgruppe unter Verwendung von Landoberflächenmodellen beinhaltet. Durch derartige Landoberflächenmodelle können, beispielsweise unter Verwendung von Emissionskoeffizienten, die mit den jeweiligen Oberflächen assoziiert sind, aus korrigierten absoluten Temperaturwerten, die beispielsweise eine Strahlungstemperatur angeben, präzise Oberflächentemperaturen berechnet werden.

Die vorliegende Anmeldung umfasst weiterhin eine Vorrichtung zur Bestimmung der Wärmekarte eines Gebietes, wobei die Vorrichtung mindestens eine Empfangseinheit und eine Bestimmungseinheit umfasst.

Die Empfangseinheit ist hierbei konfiguriert zum Empfangen eines ersten Wärmebildes einer ersten, das Gebiet umfassenden, Landschaft, wobei das erste Wärmebild durch eine Aufnahmevorrichtung eines ersten Satelliten aufgenommen wurde, wobei das erste Wärmebild Pixel umfasst, die dem Gebiet räumlich zugeordnet sind und das Wärmebild dem Gebiet pixelweise jeweils einen ersten aufgenommenen Messwert zuweist.

Die mindestens eine Empfangseinheit ist weiterhin konfiguriert zum Empfangen eines zweiten Wärmebildes einer zweiten, das Gebiet umfassenden, Landschaft, wobei das zweite Wärmebild durch eine Aufnahmevorrichtung eines zweiten Satelliten aufgenommen wurde, wobei das zweite Wärmebild Pixel umfasst, die dem Gebiet räumlich zugeordnet sind und das zweite Wärmebild dem Gebiet pixelweise einen zweiten aufgenommenen Messwert zuweist.

Zwischen der Aufnahme des ersten Wärmebildes und der Aufnahme des zweiten Wärmebildes besteht hierbei nur ein geringer zeitlicher Versatz unterhalb einer festgelegten Schranke von vorzugsweise wenigen Minuten, beispielsweise weniger als 30 Minuten oder weniger als 10 Minuten aufgenommen.

Weiterhin ist, wie bereits in Bezug auf das Verfahren beschrieben, eine radiometrische Präzision des ersten Wärmebildes höher als eine radiometrische Präzision des zweiten Wärmebildes, und eine räumliche Auflösung des zweiten Wärmebildes ist höher als eine räumliche Auflösung des ersten Wärmebildes.

Die Bestimmungseinheit der Vorrichtung zur Bestimmung der Wärmekarte des Gebietes ist konfiguriert zum Bestimmen eines Messwertversatzes einer ersten, dem Gebiet räumlich zugeordneten, Pixelgruppe des zweiten Wärmebildes, wobei die erste Pixelgruppe eine Vielzahl von Pixeln umfasst, durch eine Summe oder Linearkombination relativer Messwerte der Pixel der ersten Pixelgruppe gegenüber dem ersten aufgenommenen Messwert des mindestens einen ersten Pixels des ersten Wärmebildes, wobei der mindestens eine erste Pixel des ersten Wärmebildes der ersten Pixelgruppe des zweiten Wärmebildes zumindest teilweise räumlich zugeordnet ist.

Wenn die Messwerte Temperaturwerte sind, so kann die Bestimmung eines Temperaturversatzes beispielsweise anhand der Formeln (1) und (2) erfolgen.

Es ist hierbei zu beachten, dass, bei Erfassung von Strahlungsdaten, die Berechnung der Strahlungstemperatur wahlweise vor oder nach dem Ermitteln des Versatzen erfolgen kann. Es ist also möglich, wie in Formeln (1) und (2) beschrieben, dass die Sensordaten in Temperaturwerte umgewandelt werden und dann durch den Vergleich der Temperaturwerte des ersten und zweiten Wärmebildes ein Temperaturversatz bestimmt wird. Alternativ kann aber auch ein Messwertversatz auf Grundlage einer anderen gemessenen oder abgeleiteten Größe erfolgen und die Umwandlung in Temperaturwerte erst hinterher erfolgen.

Die Bestimmungseinheit ist weiterhin konfiguriert zum Bestimmen korrigierter absoluter Messwerte der Pixel der ersten Pixelgruppe basierend auf den zweiten aufgenommenen Messwerten der Pixel der ersten Pixelgruppe sowie des Messwertversatzes.

Nachfolgend sind optionale, vorteilhafte Ausführungsformen für das Verfahren und die Vorrichtung zur Bestimmung der Wärmekarte beschrieben.

Vorzugsweise sind sowohl das erste als auch das zweite Wärmebild jeweils Infrarotbilder, die jeweils durch Infrarotsensoren des ersten bzw. des zweiten Satelliten aufgenommen wurden.

Für normale LSTs im Bereich von auf der Erde vorkommenden, großflächigen Temperaturen, e.g. -40 bis 60 °C, werden beispielsweise Infrarotwellen im Bereich von 8 - 14 $\mu$m, oft sogar nur 10,8 und 12 $\mu$m genutzt. Für Waldbrände ist der kurzwelligere Infrarotbereich interessanter, bspw. zwischen 3 - 5 $\mu$m. Die meisten Wettersatelliten haben daher mehrere Bänder, die den Bereich 0,5 - 13 $\mu$m abdecken. Die aufgenommenen Messwerte können somit in Vektorform vorliegen.

Die räumliche Auflösung des ersten Wärmebildes ist im Allgemeinen deutlich, um mindestens eine oder sogar zwei oder drei Größenordnungen gröber als die räumliche Auflösung des zweiten Wärmebildes. Beispielsweise können die Pixel des ersten Wärmebildes eine Kantenlänge von mindestens ca. 1 km haben, so dass die durch einen Pixel abgedeckte Fläche beim ersten Wärmebild Bereich von etwa 1 km$^2$ oder sogar mehr als 1 km$^2$ oder mehr als 3 km$^2$ liegt. Im Gegensatz dazu beträgt die Kantenlänge eines Pixels des zweiten Wärmebildes vorzugsweise unter 100 m, oder sogar unter 70 m oder unter 50 m. Idealerweise liegt die Kantenlänge eines Pixels des zweiten Wärmebildes im Bereich von nur 10 m, so dass die Fläche, die durch einen Pixel des zweiten Wärmebildes abgebildet wird, nur wenige 100 m$^2$ beträgt.

Alternativ ist das hier beschriebene Verfahren aber auch anwendbar, wenn die räumliche Auflösung des ersten Wärmebildes um weniger als eine Größenordnung, beispielsweise nur um einen Faktor von 2 oder 3, gröber als die räumliche Auflösung des zweiten Wärmebildes ist. Das Verfahren ist auf jedes Bildpaar anwendbar, bei dem die räumliche Auflösung des zweiten Wärmebildes höher, oder weniger grob, als die räumliche Auflösung des ersten Wärmebildes ist.

Außerdem ist die radiometrische Präzision des ersten Wärmebildes höher als die radiometrische Präzision des zweiten Wärmebildes. Diese Eigenschaft der Wärmebilder wird vorzugsweise dadurch erreicht, dass die Aufnahmevorrichtung des ersten Satelliten über entsprechende Kalibrierungstechnik, beispielsweise durch die Verwendung von Schwarzkörpern oder speziell gekühlten bzw. temperaturkontrollierten Sensoren verfügt, die eine hohe radiometrische Genauigkeit, vorzugsweise unter 2 K oder, besonders bevorzugt, sogar unter 1 K, idealerweise pro Pixel oder auch im Mittel der aufgenommenen Wärmebilder garantiert. Zur Erhöhung der Einschätzbarkeit der Genauigkeit können die Aufnahmevorrichtungen der Satelliten weiterhin Daten mitliefern, die, vorzugsweise pro aufgenommenen Pixel, eine durch Sensoren der Aufnahmevorrichtung geschätzte Messgenauigkeit angeben. Die radiometrische Präzision des zweiten Wärmebildes ist geringer, beispielsweise dadurch, dass das zweite Wärmebild durch die Aufnahmevorrichtung eines kostengünstigeren Kleinsatelliten oder eines anderen bemannten oder unbemannten Flugobjekts aufgenommen wurde, welches über keine entsprechend präzise Kalibrierungstechnik verfügt.

Weiterhin umfasst die vorliegende Anmeldung ein Verfahren zur Bestimmung der Veränderung einer Messgröße innerhalb eines Gebietes über einen Zeitraum, wie beispielsweise innerhalb einer Stunde, eines Tages oder auch innerhalb einer Woche, eines Monats oder eines Jahres. Durch eine möglichst präzise Bestimmung der zeitlichen Veränderung der Messgröße eines Gebietes können beispielsweise städtische Hitzeinseln erfasst und deren Ursachen analysiert werden. Weiterhin liefern derartige Messgröße-Zeitreihen Erkenntnisse für die Stadtplanung, bspw. die Wirkung von Grünanlagen, verschiedenen Dächertypen oder Wasserflächen auf das städtische Klima.

Das beschriebene Verfahren zur Bestimmung der Veränderung der Messgröße innerhalb eines Gebietes umfasst zunächst das Bestimmen von mindestens zwei, vorzugsweise einer Vielzahl von mehr als 10 oder mehr als 100, möglichst präzisen Wärmekarte des Gebietes zu unterschiedlichen Zeitpunkten, wobei die beiden Wärmekarten gemäß dem oben beschriebenen Verfahren bestimmt wurden.

Insbesondere wurde die erste Wärmekarte unter Verwendung eines ersten und eines zweiten empfangenen Wärmebildes des Gebietes bestimmt, wobei das erste und zweite Wärmebild zeitlich synchron oder annähernd synchron zu einem ersten Zeitpunkt aufgenommen wurden und, von dem ersten und zweiten Wärmebild, das erste Wärmebild eine höhere radiometrische Präzision und das zweite Wärmebild eine höhere räumliche Auflösung besitzt.

Weiterhin wurde die zweite Wärmekarte unter Verwendung eines dritten und eines vierten empfangenen Wärmebildes des Gebietes bestimmt, wobei das dritte und vierte Wärmebild zeitlich synchron oder annähernd synchron zu einem zweiten Zeitpunkt aufgenommen wurden und, von dem dritten und vierten Wärmebild, das dritte Wärmebild eine höhere radiometrische Präzision und das vierte Wärmebild eine höhere räumliche Auflösung besitzt.

Aus der ersten und zweiten Wärmekarte des Gebietes kann dann eine Zeitreihe der Messgröße innerhalb des Gebietes erstellt werden.

Es ist optional auch möglich auf diese Art Wärmekarten einer Vielzahl von Zeitpunkten für ein Gebiet zu bestimmen und basierend auf der Vielzahl von Wärmekarten des Gebietes eine Zeitreihe der Messgröße innerhalb des Gebietes zu erstellen.

Vorzugsweise liegen der erste und zweite Zeitpunkt innerhalb einer festgelegten Zeitspanne, beispielsweise innerhalb eines Tages, oder innerhalb weniger Stunden oder sogar innerhalb unter einer oder einer halben Stunde, um eine hohe zeitliche Auflösung der Zeitreihe der Messgröße innerhalb des Gebietes zu gewährleisten, beispielsweise um die Veränderung der Messgröße innerhalb eines Tages zu erfassen.

Um eine derartige hohe zeitliche Auflösung zu erreichen, ist es beispielsweise möglich, dass das erste und das dritte Wärmebild jeweils von einer großen Satellitenplattform mit entsprechender Kalibrierungstechnik zur Gewährleistung hoher radiometrischer Präzision, wie beispielsweise einem geostationären Wettersatelliten aufgenommen werden. Bei der Verwendung eines ersten und dritten Wärmebildes, die durch geostationäre Satelliten aufgenommen werden, werden vorzugsweise sowohl das erste als auch das dritte Wärmebild durch die Aufnahmevorrichtung desselben geostationären Satelliten aufgenommen. Alternativ können das erste und dritte Wärmebild auch von unterschiedlichen geostationären Satelliten mit ähnlicher Abdeckung stammen.

Weiterhin ist es alternativ auch möglich, dass das erste und dritte Wärmebild durch die Aufnahmevorrichtungen unterschiedlicher großer aber nicht geostationärer Satelliten in einem niedrigen Erdorbit aufgenommen werden, wobei die Aufnahmevorrichtungen jeweils mit Kalibrierungstechnik für hohe Messgenauigkeit ausgestattet sein sollten. Wenn das erste und dritte Wärmebild von unterschiedlichen nicht geostationären Satellitenplattformen stammen, so ist dies nur möglich, wenn diese beiden Satellitenplattformen sich innerhalb der vorgegebenen Zeitspanne über dem Gebiet befunden haben. Da nicht geostationäre große Satelliten, wie beispielsweise Landsats, bezüglich eines vorgegebenen Gebietes eine zeitliche Wiederholrate von mehreren Tagen bis mehreren Wochen haben, sind derartige Aufnahmen innerhalb eines vorgegebenen Zeitfensters durch unterschiedliche nicht-geostationäre Satelliten mit aktuell vorhandener Satelliteninfrastruktur vor allem opportunistisch möglich, jedoch ungeeignet zur Erstellung kontinuierlicher Zeitreihen über einem ausgewählten Gebiet mit mehreren, beispielsweise mehr als 10 oder mehr als 100 Bildpaaren, wobei die zeitlichen Abstände von je zwei konsekutiv aufgenommenen Bildpaaren jeweils einen zeitlichen Abstand von wenigen Minuten oder Stunden aufweisen.

Wie viele Bildpaare zur Erstellung einer Zeitreihe notwendig sind, wie auch die tolerierbaren zeitlichen Abstände der Bildpaare ist im Allgemeinen stark anwendungsabhängig. So können für manche Anwendungen, bei denen eine Temperaturentwicklung beispielsweise über das Jahr beobachtet werden soll, ein oder zwei Bilder pro Tag ausreichen, während für andere Anwendungen, bei denen beispielsweise eine Hitzeentwicklung im Tagesverlauf untersucht werden soll, eine zeitliche Auflösung von nur wenigen Minuten wünschenswert ist, beispielsweise unter 10 oder unter 30 Minuten. Zur Erstellung einer längeren Zeitreihe bestehend aus über 10 oder über 100 Bildpaaren ist es hilfreich, wenn von jedem synchron aufgenommenen Bildpaar das erste Wärmebild mit der höheren radiometrischen Präzision immer oder zumindest meistens durch denselben geostationären Satelliten aufgenommen wurde. Um gleichzeitig eine hohe räumliche Auflösung zu erreichen, werden das zweite Wärmebild und auch das vierte Wärmebild jeweils durch Aufnahmevorrichtungen von Kleinsatelliten oder anderen bemannten oder unbemannten Flugobjekten aufgenommen, die durch ihre Nähe zur Erde eine hohe räumliche Auflösung der aufgenommenen Wärmebilder bereitstellen können.

Diese eben beschriebenen Kleinsatelliten umkreisen die Erde im Allgemeinen in einem niedrigen Erdorbit. Zur Realisierung einer hohen zeitlichen Auflösung können daher vorzugsweise die Wärmebilder mehrerer verschiedener Kleinsatelliten, wie Piko-, Nano-, oder Mikrosatelliten verwendet werden, so dass das zweite Wärmebild von der Aufnahmevorrichtung eines ersten Kleinsatelliten aufgenommen wurde während das vierte Wärmebild von der Aufnahmevorrichtung eines zweiten Kleinsatelliten aufgenommen wurde. Da Kleinsatelliten, wie beispielsweise CubeSats, im Vergleich zu geostationären Großsatelliten, kostengünstiger in der Herstellung sind, ist es möglich, diverse Kleinsatelliten einzusetzen um eine Zeitreihe mit hoher zeitlicher Auflösung der Messgröße innerhalb eines Gebietes zu generieren.

Die vorliegende Beschreibung umfasst weiterhin ein Computerprogrammprodukt zur Berechnung eines Wärmebildes, wobei das Computerprogrammprodukt Instruktionen beinhaltet die, wenn sie auf einem Computer ausgeführt werden, das zuvor beschriebene Verfahren ausführen. Die Instruktionen können dabei wahlweise Instruktionen zur Bestimmung eines räumlich hochaufgelösten und gleichzeitig messgenauen Wärmebildes eines Gebietes sein oder die Instruktionen können Instruktionen zur Bestimmung einer Zeitreihe der Messgröße innerhalb des Gebietes sein. In jedem Fall basieren die Instruktionen auf Wärmebildern unterschiedlicher Satellitenplattformen, die durch eine entsprechende Empfangseinheit des Computers empfangen werden.

Der Computer kann hierbei ein stationärer PC sein, oder ein mobiler Computer. Der Computer kann auch teil eines verteilten Systems oder ein cloudbasierter Dienst sein, der zur Ausführung von Programminstruktionen geeignet ist.

Die zuvor mit Bezug auf das Verfahren oder die Vorrichtung zur Erstellung einer Wärmekarte beschriebenen Merkmale können weiterhin auch im Bezug auf das Verfahren, die Vorrichtung oder das Computerprogrammprodukt zum Einsatz kommen.

Weitere vorteilhafte Ausführungsformen sind nachfolgend anhand der Figuren beschrieben. Als Messgröße wurde in diesem Fall aufgrund ihrer leichten Interpretierbarkeit die Temperatur gewählt. Alternativ können die Messwerte aber auch andere radiometrische Daten wie Strahldichten oder weitere durch die Sensoren der verwendeten Satelliten erfasste oder aus den erfassten Messwerten abgeleitete Daten umfassen. Es zeigen

Fig. 1 Eine schematische Darstellung einer Vorrichtung zur Bestimmung einer Wärmekarte eines Gebietes;

Fig. 2 Eine schematische Darstellung eines Ablaufs des Verfahrens zur Bestimmung einer Wärmekarte eines Gebietes;

Fig. 3A Schematische Darstellung eines mit einem ersten Satellit A aufgenommenen Wärmebildes der Erdoberfläche;

Fig. 3B Schematische Darstellung eines mit einem zweiten Satellit B zeitlich synchron zur Fig. 3B aufgenommenen Wärmebildes der Erdoberfläche;

Fig. 4A Schematische Darstellung eines einzelnen Bildpunktes des von Satellit A aufgenommenen Wärmebildes laut Fig. 3A;

Fig. 4B Schematische Darstellung der Messung von Satellit B der gleichen Region wie in Fig. 4A gezeigt;

Fig. 4C Schematische Darstellung der Bestimmten Wärmekarte auf Basis von Fig. 4B und einem bestimmten Temperaturversatz.

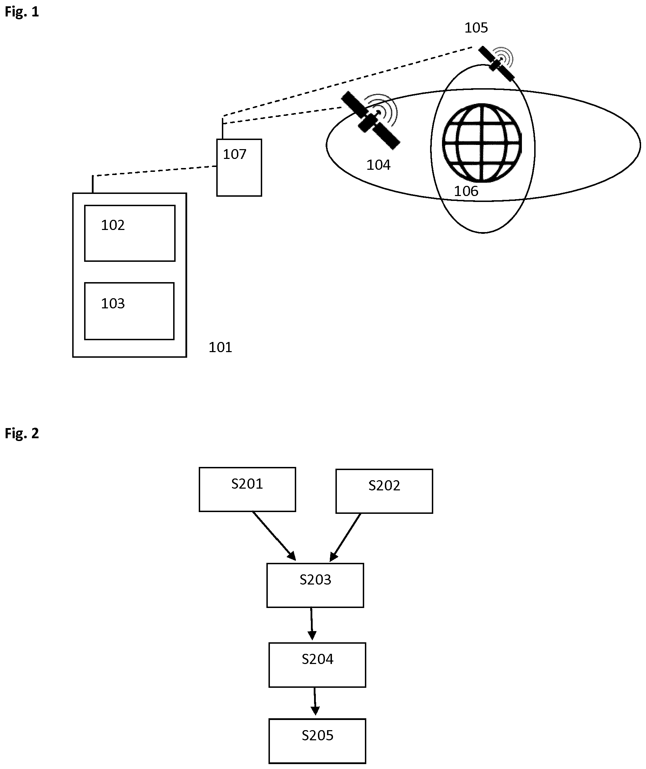

Figur 1 zeigt eine Vorrichtung, zur Bestimmung einer Wärmekarte eines Gebietes. Die Vorrichtung 101 umfasst eine Empfangseinheit 102, die Signale verschiedener Satelliten 104 und 105, die um die Erde 106 kreisen, empfangen kann. Der Empfang der Signale der Satelliten 104, 105 erfolgt zumeist indirekt, das heißt nicht direkt vom Satelliten, sondern über ein Zwischengerät 107, welches die Signale des oder der Satelliten 104, 105 empfangen und dann weiterleiten oder zum Download bereitstellen. Die Empfangseinheit empfängt insbesondere Wärmebilddaten der Erdoberfläche, die von Aufnahmevorrichtungen der Satelliten 104 und 105 aufgenommen wurden. Um eine detaillierte Wärmekarte eines Gebietes mit hoher räumlicher Auflösung im Bereich von wenigen Metern bis weniger 10-Metern und hoher radiometrischer Messgenauigkeit, wie hoher Temperaturgenauigkeit zu erstellen, ist die Empfangsvorrichtung 102 konfiguriert zunächst ein erstes Wärmebild eines ersten Satelliten 104 und ein zweites Wärmebild eines zweiten Satellit 105 zu empfangen.

Hierbei ist der erste Satellit 104 ein Großsatellit mit hoher Temperaturgenauigkeit, wie beispielsweise ein geostationärer Wettersatellit oder ein in einem niedrigen Erdorbit kreisender Großsatellit, wie beispielsweise ein Landsat. Zum Erreichen einer Temperaturgenauigkeit von vorzugsweise unter 2 K verfügt der erste Satellit 104 über eingebaute Kalibrierungstechnik. Im Falle von einem geostationären ersten Satelliten, verfügt dieser erste Satellit 104 aber aufgrund seiner großen Entfernung zur Erde nur über ein recht grobes räumliches Auflösungsvermögen, so dass die aufgenommenen Pixel eine Größe von mehreren Quadratkilometern haben. Wenn, alternativ, ein Großsatellit in einem niedrigen Erdorbit, wie beispielsweise ein Landsat, als erster Satellit 104 eingesetzt wird, so ist die räumliche Auflösung bereits besser als bei den zuvor beschriebenen geostationären Satelliten, aber es ist immer noch Potential zur Verbesserung unter Berücksichtigung räumlich höher auflösender Wärmebilder einer zweiten Satellitenplattform möglich. Beispielsweise verfügt Landsat 8 aktuell über eine Auflösung von 100 m. Durch die Verwendung eines kleinen Satelliten als Hilfssatellit kann diese Auflösung auf deutlich unter 60 m verbessert werden. Mit Nachbearbeitung der Daten sind auch noch geringere Auflösungen, beispielsweise unter 30 m möglich.

Der zweite Satellit 105 ist ein Kleinsatellit oder CubeSat, der ein höheres räumliches Auflösungsvermögen im Vergleich zum ersten Satelliten hat, aber nur eine, im Vergleich zum ersten Satelliten, reduzierte Messgenauigkeit.

Die Empfangseinheit 102 der beschriebenen Vorrichtung empfängt zeitlich und synchron aufgenommene erste und zweite Wärmebilder von räumlich koregistrierten Landschaften der beiden Satelliten 104 und 105, d.h., die aufgenommenen Teilgebiete der Erdoberfläche überlappen sich zumindest teilweise. Um nun eine präzise Wärmekarte eines Gebietes zu erstellen, die auf beiden Wärmebildern abgebildet ist, umfasst die Vorrichtung 101 weiterhin eine Bestimmungseinheit 103.

Die Bestimmungseinheit 103 ist konfiguriert einen Bildpunkt des ersten Wärmebildes des ersten Satelliten einer Gruppe von Bildpunkten des zweiten Wärmebildes des zweiten Satelliten räumlich zuzuordnen und einen Messgrößenversatz oder Temperaturversatz der Gruppe von Bildpunkten des zweiten Wärmebildes zu berechnen. Diese Berechnung erfolgt unter der Annahme, dass die Temperaturabweichung oder Messgrößenabweichung der Bildpunkte des zweiten Wärmebildes zumindest lokal konstant ist, d.h. dass die Abweichung eines Bildpunktes sich nicht oder nur sehr gering von der Abweichung benachbarter Bildpunkte unterscheidet. Weiterhin erfolgt die Annahme, dass sich die (mit hoher Präzision gemessene) Messgröße oder Temperatur des Bildpunktes des ersten Wärmebildes als (gewichtete) Summe oder Linearkombination der zugeordneten Bildpunkte des zweiten Wärmebildes darstellen lässt. Somit lässt sich der Messgrößenversatz für die Gruppe von Bildpunkten des zweiten Wärmebildes aus den relativen Messgrößenunterschieden der Bildpunkte der Gruppe des zweiten Wärmebildes und der aufgenommenen Messgröße des zugeordneten Bildpunktes des ersten Wärmebildes bestimmen. Die Bestimmungseinheit 103 ist weiterhin konfiguriert, aus dem Messgrößenversatz und den aufgenommenen Messgrößen des zweiten Wärmebildes eine präzise Wärmekarte des Gebietes zu erstellen.

Figur 2 zeigt schematisch ein Verfahren zur Bestimmung einer präzisen Wärmekarte eines Gebiets, wobei das Verfahren beispielsweise durch die zuvor beschriebene Anordnung oder durch ein Computerprogrammprodukt, welches entsprechende Instruktionen zur Durchführung des Verfahrens umfasst, implementiert werden kann.

Das hier beschriebene Verfahren zur Bestimmung der präzisen Wärmekarte eines Gebiets umfasst die folgenden Schritte:

S201: Empfangen eines ersten Wärmebildes einer ersten, das Gebiet umfassenden, Landschaft, welches durch eine Aufnahmevorrichtung eines ersten Satelliten aufgenommen wurde, wobei das erste Wärmebild Pixel umfasst, die dem Gebiet räumlich zugeordnet sind und das Wärmebild dem Gebiet pixelweise jeweils einen ersten aufgenommenen Messwertzuweist.

S202: Empfangen eines zweiten Wärmebildes einer zweiten, das Gebiet umfassenden, Landschaft, welches durch eine Aufnahmevorrichtung eines zweiten Satelliten aufgenommen wurde, wobei das zweite Wärmebild Pixel umfasst, die dem Gebiet räumlich zugeordnet sind und das Wärmebild dem Gebiet pixelweise jeweils einen zweiten aufgenommenen Messwert zuweist.

Es ist zu beachten, dass die Schritte S201 und S202 in beliebiger Reihenfolge oder auch gleichzeitig ausgeführt werden können.

Das empfangene erste und zweite Wärmebild müssen zur Durchführung des Verfahrens zusätzlich die folgenden Anforderungen erfüllen: zwischen der Aufnahme des ersten Satellitenbildes und der Aufnahme des zweiten Satellitenbildes darf nur ein zeitlicher Versatz unterhalb einer festgelegten Schranke, vorzugsweise unter 10 Minuten oder sogar unter 5 Minuten bestehen, da die Korrelation der thermischen Messwerte, die in den beiden Wärmebildern gegeben ist, bei einem größeren zeitlichen Abstand zwischen den Aufnahmen der beiden Bilder nicht oder nur schwierig möglich ist. Die zeitliche Schranke kann in Abhängigkeit von den vorliegenden Rahmenbedingungen gewählt werden. Bei gleichbleibenden Wetterbedingungen sind somit unter Umständen längere Abstände zwischen den beiden Aufnahmen tolerierbar als bei wechselnden Wetterbedingungen.

Weiterhin ist eine radiometrische Präzision des ersten Wärmebildes, d.h. die Genauigkeit der aufgenommenen Messgröße, höher als eine radiometrische Präzision des zweiten Wärmebildes, wohingegen eine räumliche Auflösung des zweiten Wärmebildes höher ist als eine räumliche Auflösung des ersten Wärmebildes.

Nach dem Empfang der beiden Wärmebilder können die folgenden weiteren Verfahrensschritte ausgeführt werden:

S203: Bestimmen eines Messgrößenversatzes einer ersten, dem Gebiet räumlich zugeordneten, Pixelgruppe des zweiten Wärmebildes, wobei die erste Pixelgruppe eine Vielzahl von Pixeln umfasst, durch eine gewichtete Summe relativer Messwerte der Pixel der ersten Pixelgruppe des zweiten Wärmebildes gegenüber dem ersten aufgenommenen Messwert des mindestens einen Pixels des ersten Wärmebildes, der der ersten Pixelgruppe des zweiten Wärmebildes zumindest teilweise räumlich zugeordnet ist. Hierbei wird beispielsweise der Mittelwert der Messwerte der ersten Pixelgruppe bestimmt um dann den Versatz, beispielsweise als Differenz, zu dem oder den zugeordneten Messwerten des ersten Gebiets des ersten Wärmebildes zu bestimmen.

S204: Bestimmen korrigierter absoluter Messwerte der dem Gebiet zugeordneten Pixel der ersten Pixelgruppe basierend auf den zweiten gemessenen Messwerten der Pixel der ersten Pixelgruppe sowie des Messwertversatzes.

S205: Erstellung der präzisen Wärmekarte des Gebietes auf Grundlage der korrigierten absoluten Messwerte.

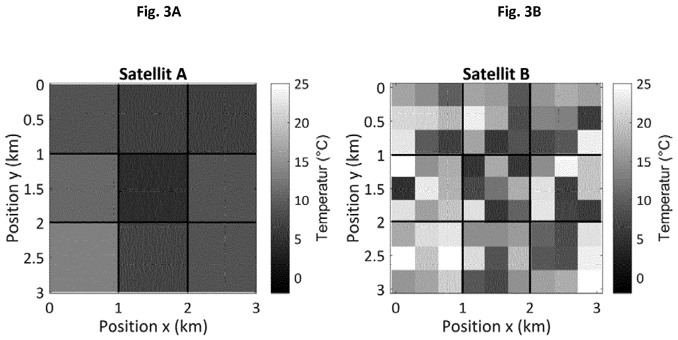

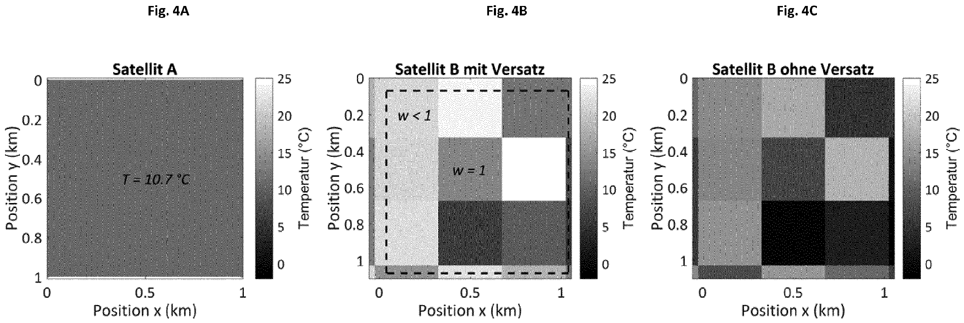

Das eben beschriebene Verfahren zum Bestimmen räumlich hochauflösender Wärmekarten mit hoher Messgenauigkeit wird weiterhin anhand der Figuren 3A, 3B, 4A, 4B und 4C beschrieben. Das hier vorgestellte Verfahren kombiniert die radiometrische Genauigkeit großer Satellitenplattformen mit dem räumlichen Auflösungsvermögen einer zweiten Satellitenplattform, bspw. eines Kleinsatelliten oder CubeSats. Das Verfahren basiert auf der Annahme, dass sich die spezifische Intensität (Strahldichte, *radiance*) eines Bildpunkts aus der Linearkombination seiner Subpixelkomponenten ergibt (*linear mixing model*). Als große Satellitenplattform dient idealerweise eine solche mit einer sehr hohen radiometrischen Präzision (Sentinel-3) und gleichzeitig hoher zeitlicher Auflösung (Meteosat Second und Third Generation).

Einzige Voraussetzung für den zusätzlichen, kleineren Satelliten ist dabei, dass dieser die Möglichkeit zur synchronen Aufnahme besitzt, also IR-Bilder der gleichen Region zur gleichen Zeit aufnimmt. Die aufgenommenen Bilder sind schematisch für beide Satelliten in Figuren 3A und 3B dargestellt, wobei in diesem Fall die Temperatur als relevante Messgröße gewählt wurde. Dabei bezeichnet Satellit A (Figur 3A) die Plattform mit hoher radiometrischer Präzision und Satellit B (Figur 3B) die Plattform mit hoher räumlicher Auflösung.

Das eingezeichnete Gitter zeigt, welche Bereiche des Bildes von Satellit B welchem Bildpunkt von Satellit A zuzuordnen sind. Die Daten von Satellit B besitzen einen nicht bekannten Temperaturversatz $\Delta T$ bei der Messung der Strahlungstemperatur, der eine genaue absolute Temperaturbestimmung für Satellit B alleine nicht zulässt. Relative Temperaturdifferenzen, bspw. zwischen angrenzenden Bildpunkten, werden von Satellit B korrekt gemessen (sichergestellt durch eine vorherige Kalibrierung des Instruments).

Durch die Aufnahme von Satellit A ist der Mittelwert einer jeder eingezeichnete Gitterzelle aus dem Bild von Satellit B bekannt. Damit kann der noch unbekannte Temperaturversatz $\Delta T$ herausgerechnet werden. Dieser ist gegeben durch die Differenz der Mittelwerte einer jeden Zelle beider Bilder,

$$\Delta T = T_A(x, y) - \frac{1}{N} \sum_{(i,j)\, in\, T_A(x,y)} w(i,j)\, T_B(i,j).$$

Dabei gilt

$$\sum_{(i,j)\, in\, T_A(x,y)} w(i,j) = N.$$

$T_A(x, y)$ ist die gemessene Temperatur von Satellit A in der Zelle $(x, y)$ und $T_B(i, j)$ der Temperaturmessung von Satellit B in allen Bildpunkten $(i, j)$, die innerhalb dieser Zelle $(x, y)$ von Satellit A mit je einem Flächenanteil von $w(i, j)$ liegen.

Das Messverfahren ist schematisch für eine einzelne Zelle in Figuren 4A, 4B und 4C dargestellt: Der Mittelwert aller dargestellten Bildpunkte von Satellit B (Figur 4B) entspricht noch nicht dem Wert des korrespondierenden Bildpunkts von Satellit A (Figur 4A). Durch Abzug eines sich aus der Differenz ergebenden Temperaturversatzes wird die gesamte Zelle des Bildes von Satellit B kalibriert und besitzt nun den gleichen Mittelwert wie von Satellit A aufgenommen (Figur 4C).

Es gibt mehrere Vorteile gegenüber bereits existierenden Lösungen:
Das vorgestellte Verfahren verbindet die Vorteile beider Messungen, hohe radiometrische Präzision auf der einen Seite und hohe räumliche Auflösung auf der anderen Seite, ohne auf weitere Datenquellen zugreifen zu müssen. Damit sind Auflösungen von der Größenordnung weniger Meter realisierbar, was gerade für Anwendungen im Bereich der UHI und der satellitengestützten Landwirtschaft von großer Bedeutung ist.

Durch die hohe räumliche Auflösung von Satellit B muss kein oder ein nur sehr begrenztes Downsampling erfolgen und die Anzahl der Oberflächenklassen pro Pixel ist bei einer hohen Auflösung deutlich verringert, was die Stabilität und Genauigkeit der Landoberflächentemperatur erhöht, welche unter Berücksichtigung von Landoberflächenmodellen und bekannten Emissionsgraden aus der durch die bestimmte Wärmekarte gegebene Strahlungstemperatur bestimmt werden kann.

Weiterhin wird eine Verwendung der instabilen Korrelation zwischen visuellen und IR Bildern vermieden und der Effekt der Temperaturhomogenisierung durch die Wahl von zu wenigen Oberflächenklassen wird deutlich abgemildert. Außerdem werden Fehler durch eine große Auflösungslücke zwischen Bodenauflösung des Satellitensensors und Auflösung der Hilfsdaten vermieden.

Es existieren bereits Thermaldaten mit hoher radiometrischer Präzision, die als Kalibriermaßstab für das Konzept dienen können. So bietet Copernicus über Sentinel-3 Temperaturdaten mit < 0.2 K Genauigkeit an bei einer Auflösung von 1 km$^2$. Diese Daten sind über das Copernicus-Programm frei und offen zugänglich. Meteosat-9 bietet etwa 9 - 15 km$^2$ Auflösung bei einer Temperaturgenauigkeit von etwa 2 K und einer zeitlichen Auflösung von wenigen Minuten bei großflächiger Abdeckung.

Mit einer zeitlichen Wiederholrate von ungefähr 10 - 15, oder bis zu 5 Minuten über Europa durch Meteosat-9 kann zudem eine zeitliche und räumliche Synchronisation der beiden Datenströme leicht erfolgen.

Damit eignet sich das Konzept auch für Messungen mit hohen zeitlichen Wiederholraten bei Verwendung mehrerer (Klein-)Satelliten in einer geeigneten Konstellation. Somit kann eine Zeitreihe der Messgröße innerhalb eines Gebietes erstellt werden, die eine Analyse und/oder Visualisierung der Messgrößenveränderung eines Gebietes im Laufe einer bestimmten Zeitspanne, beispielsweise im Laufe eines Tages, ermöglicht.

Hierbei werden zuvor bestimmte Wärmekarten eines Gebietes zu einer Zeitreihe zusammengefasst, wobei die Aufnahmezeitpunkte jeweils zwei konsekutive Wärmekarten der Zeitreihe jeweils innerhalb einer festgelegten Zeitspanne liegen. Als Aufnahmezeitpunkt einer Wärmekarte kann hierbei der Zeitpunkt der Aufnahme der dieser Wärmekarte zugeordneten ersten und zweiten Wärmebilder betrachtet werden oder, bei einem geringen zeitlichen Versatz der beiden synchronen Aufnahmen der Wärmebilder durch die beiden verwendeten Satelliten, auch ein mittlerer Zeitpunkt oder ein Paar der beiden Aufnahmezeitpunkte der Wärmebilder. Die festgelegte Zeitspanne kann je nach Anwendung unterschiedlich sein, liegt aber in vielen Fällen innerhalb weniger Stunden, unter einer Stunde oder sogar im Bereich von etwa 10 Minuten. Die Aufnahme mehrerer konsekutiver Bilder jeweils innerhalb der festgelegten Zeitspanne kann daher in vielen Fällen nur durch einen geostationären Satelliten oder durch eine Vielzahl von Satelliten in einem niedrigen Erdorbit erfolgen.

Die Anforderungen an den IR-Detektor von Satellit B sind relativ gering, so dass sich der Ansatz für die Verwendung in im Vergleich zu traditionellen Satellitenmissionen deutlich günstigeren Kleinsatelliten oder CubeSats eignet. Somit ist eine Verbesserung der bisher verfügbaren räumlichen Auflösung um mehrere Größenordnungen bei einem Bruchteil der Kosten einer traditionellen Satellitenmission möglich. Die maximal erreichbare räumliche Auflösung ist quasi nur durch den Detektor und die Optik des Satelliten limitiert.

Eine aufwendige und komplexe absolute Kalibrierung des Detektors an Bord von Satellit B entfällt, ohne dass sich dadurch die Genauigkeit der resultierenden Landoberflächentemperatur verschlechtert. Die Lösung benötigt kein Tracking oder Erkennung von Objekten im Bild und keine Bodenmessungen.

Die deutliche Erhöhung der räumlichen Auflösung ohne die Einführung von durch Downsampling generierten Fehlerquellen ermöglich eine Vielzahl neuer oder verbesserter Applikationen, bspw. bei der lokalisierten Vorhersage von Verkehrsbedingungen (z.B. nasse oder verreiste Straßen), in der Umweltforschung (z.B. Bewegung von Schotterablagerungen auf Gletschern, Waldbränden), in der Landwirtschaft (Vegetationsgesundheit über Evapotranspiration), in der Medizin (z.B. Gesundheitsrisiko von Überhitzung) sowie, eng damit verbunden, bei der Städteplanung (z.B. Energieeffizienzbestimmung von Gebäuden oder Messung des städtischen Mikroklimas).

Letztere ist als Applikation besonders interessant, um die Effekte von urbanen Hitzeinseln und entsprechenden Gegenmaßnahmen zu untersuchen. Eine Erhöhung der Auflösung von Quadratkilometern auf die Größe eines Gebäudes oder Gebäudeblocks liefert wichtige Informationen zur Energieeffizienz, zur Temperaturentwicklung sowie zum Einfluss von Grünanlagen, begrünten oder reflektierenden Dächern oder offenen Wasserflächen auf städtisches Klima. Bisher basieren entsprechende Erhebungen auf einem Stückwerk aus simulierten Modellen zusammen mit vereinzelten Bodenmessungen sowie Daten, die durch eines der oben beschriebenen Downsamplingverfahren erzeugt wurden. Eine zeitlich und räumlich hoch aufgelöste Methode kann helfen, die Städte der Zukunft gesünder und umweltfreundlicher zu planen.

## Patentansprüche

1. Verfahren zur Erstellung einer Wärmekarte eines Gebietes, umfassend die folgenden Schritte:

   - Empfangen eines ersten Wärmebildes einer ersten, das Gebiet umfassenden, Landschaft, welches durch eine Aufnahmevorrichtung eines ersten Satelliten (104) aufgenommen wurde, wobei das erste Wärmebild Pixel umfasst, die dem Gebiet räumlich zugeordnet sind und das Wärmebild dem Gebiet pixelweise jeweils einen ersten Messwert zuweist (S201);

   - Empfangen eines zweiten Wärmebildes einer zweiten, das Gebiet umfassenden, Landschaft, welches durch eine Aufnahmevorrichtung eines zweiten Satelliten (105) aufgenommen wurde, wobei das zweite Wärmebild Pixel umfasst, die dem Gebiet räumlich zugeordnet sind und das Wärmebild dem Gebiet pixelweise jeweils einen zweiten Messwert zuweist (S202);

wobei zwischen der Aufnahme des ersten Wärmebildes und der Aufnahme des zweiten Wärmebildes ein zeitlicher Versatz unterhalb einer festgelegten Schranke besteht; und eine radiometrische Präzision des ersten Wärmebildes höher ist als eine radiometrische Präzision des zweiten Wärmebildes; und eine räumliche Auflösung des zweiten Wärmebildes höher ist als eine räumliche Auflösung des ersten Wärmebildes;

- Bestimmen eines Messwerteversatzes einer ersten, dem Gebiet räumlich zugeordneten, Pixelgruppe des zweiten Wärmebildes, wobei die erste Pixelgruppe eine Vielzahl von Pixeln umfasst, durch einen Vergleich relativer Messwerte der Pixel der ersten Pixelgruppe des zweiten Wärmebildes gegenüber dem ersten Messwert des mindestens einen Pixels des ersten Wärmebildes, der der ersten Pixelgruppe des zweiten Wärmebildes zumindest teilweise räumlich zugeordnet ist (S203),

- Bestimmen korrigierter absoluter Messwerte der dem Gebiet zugeordneten Pixel der ersten Pixelgruppe basierend auf den zweiten Messwerten der Pixel der ersten Pixelgruppe sowie des Messwerteversatzes (S204); und

- Erstellung der präzisen Wärmekarte des Gebietes auf Grundlage der korrigierten absoluten Messwerte (S205).

2. Verfahren gemäß Anspruch 1, weiterhin umfassend, ein Bestimmen von Landoberflächentemperaturen des Gebietes basierend auf der präzisen Wärmekarte und Landoberflächenmodellen und/oder Emissionsmodellen.

3. Verfahren gemäß einem der vorhergehenden Ansprüche, wobei die Wärmebilder Infrarotbilder sind.

4. Verfahren gemäß einem der vorhergehenden Ansprüche, wobei die räumliche Auflösung des zweiten Wärmebildes mindestens eine oder zwei Größenordnungen höher ist als die räumliche Auflösung des zweiten Wärmebildes.

5. Verfahren gemäß einem der vorhergehenden Ansprüche, wobei die Messwerte Temperaturwerte sind und eine radiometrische Abweichung des ersten Wärmebildes pro Pixel unter 2K beträgt und die radiometrische Abweichung des zweiten Wärmebildes im Mittel über 2K beträgt.

6. Verfahren gemäß einem der vorhergehenden Ansprüche, wobei das erste Wärmebild durch eine zur Erhöhung der radiometrischen Präzision kalibrierte Aufnahmevorrichtung des ersten Satelliten aufgenommen wurde.

7. Verfahren gemäß einem der vorhergehenden Ansprüche, wobei das erste Wärmebild durch die Aufnahmevorrichtung eines Satelliten, der über Kalibrierungsmethoden an Bord verfügt, aufgenommen wurde.

8. Verfahren gemäß einem der vorhergehenden Ansprüche, wobei das zweite Wärmebild durch die Aufnahmevorrichtung eines Satelliten mit einem Gewicht unter 1000 kg aufgenommen wurde.

9. Verfahren zur Bestimmung einer Veränderung von Temperaturen eines Gebietes über einen Zeitraum beinhaltend die folgenden Schritte:

- Bestimmen einer ersten Wärmekarte des Gebietes zu einem ersten Zeitpunkt gemäß dem Verfahren nach einem der Ansprüche 1 bis unter Verwendung eines ersten und zweiten empfangenen Wärmebildes;
- Bestimmen einer zweiten Wärmekarte des Gebietes zu einem zweiten Zeitpunkt gemäß dem Verfahren nach einem der Ansprüche 1 bis 8 unter Verwendung eines dritten und vierten empfangenen Wärmebildes,
- Erstellen einer Zeitreihe der Temperatur des Gebietes basierend auf der ersten und zweiten Wärmekarte.

10. Verfahren gemäß Anspruch 9, wobei der erste und der zweite Zeitpunkt innerhalb von einer festgelegten Zeitspanne liegen und das erste und das dritte Wärmebild jeweils eine höhere radiometrische Präzision als das zweite und vierte Wärmebild haben und jeweils von einer ersten Satellitenplattform, die über Kallibrierungsmethoden an Bord verfügt, aufgenommen wurden, das zweite Wärmebild eine höhere räumliche Auflösung als das erste und dritte Wärmebild hat und von der Aufnahmevorrichtung eines zweiten Satelliten aufgenommen wurde und das vierte Wärmebild eine höhere räumliche Auflösung als das erste und dritte Wärmebild hat und von der Aufnahmevorrichtung eines dritten Satelliten aufgenommen wurde, wobei der zweite und dritte Satellit unterschiedliche Satelliten mit einem Gewicht unter 1000 kg sind.

11. Verfahren gemäß Anspruch 9 oder 10, weiterhin umfassend die folgenden Schritte:

- Bestimmen einer Vielzahl von zusätzlichen Wärmekarten des Gebietes zu zusätzlichen Zeitpunkten, wobei jeweils zwei konsekutive Zeitpunkte der zusätzlichen Zeitpunkte jeweils innerhalb einer festgelegten Zeitspanne liegen, und

- Erstellen einer Zeitreihe der Temperatur des Gebietes basierend auf der ersten Wärmekarte, der zweiten Wärmekarte und den zusätzlichen Wärmekarten.

12. Computerprogrammprodukt zur Bestimmung einer Wärmekarte eines Gebietes, wobei das Computerprogrammprodukt Instruktionen umfasst, die, wenn ausgeführt auf einem Computer, das Verfahren nach einem der Ansprüche 1 bis 11 ausführen.

13. Vorrichtung (101) zur Erstellung einer Wärmekarte eines Gebietes umfassend

- mindestens eine Empfangseinheit (102) konfiguriert zum

Empfangen eines ersten Wärmebildes einer ersten, das Gebiet umfassenden, Landschaft, welches durch eine Aufnahmevorrichtung eines ersten Satelliten (104) aufgenommen wurde, wobei das erste Wärmebild Pixel umfasst, die dem Gebiet räumlich zugeordnet sind und das Wärmebild dem Gebiet pixelweise jeweils einen ersten Messwert zuweist,
Empfangen eines zweiten Wärmebildes einer zweiten, das Gebiet umfassenden, Landschaft, welches durch eine Aufnahmevorrichtung eines zweiten Satelliten (105) aufgenommen wurde, wobei das zweite Wärmebild Pixel umfasst, die dem Gebiet räumlich zugeordnet sind und das zweite Wärmebild dem Gebiet pixelweise einen zweiten Messwert zuweist,
wobei zwischen der Aufnahme des ersten Wärmebildes und der Aufnahme des zweiten Wärmebildes ein zeitlicher Versatz unterhalb einer festgelegten Schranke besteht; und eine radiometrische Präzision des ersten Wärmebildes höher ist als eine radiometrische Präzision des zweiten Wärmebildes; und eine räumliche Auflösung des zweiten Wärmebildes höher ist als eine räumliche Auflösung des ersten Wärmebildes;

- Bestimmungseinheit (103) konfiguriert zum

Bestimmen eines Messwerteversatzes einer ersten, dem Gebiet räumlich zugeordneten, Pixelgruppe des zweiten Wärmebildes, wobei die erste Pixelgruppe eine Vielzahl von Pixeln umfasst, durch einen Vergleich relativer Messwerte der Pixel der ersten Pixelgruppe gegenüber dem ersten Messwert des mindestens einen Pixels des ersten Wärmebildes, der der ersten Pixelgruppe des zweiten Wärmebildes zumindest teilweise räumlich zugeordnet ist;
Bestimmen korrigierter absoluter Messwerte der Pixel der ersten Pixelgruppe basierend auf den zweiten gemessenen Temperaturwerten der Pixel der ersten Pixelgruppe sowie des Messwerteversatzes;
Erstellen der Wärmekarte des Gebietes auf Grundlage der korrigierten absoluten Messwerte.

## Claims

1. A method for creating a heat map of a territory, comprising the following steps:

- receiving a first thermal image of a first landscape encompassing the territory, which was recorded by a recording device of a first satellite (104), wherein the first thermal image comprises pixels that are spatially associated with the territory, and the thermal image, pixel by pixel, assigns a respective first measured value to the territory (S201);
- receiving a second thermal image of a second landscape encompassing the territory, which was recorded by a recording device of a second satellite (105), wherein the second thermal image comprises pixels that are spatially associated with the territory, and the thermal image, pixel by pixel, assigns a respective second measured value to the territory (S202);
- wherein a temporal offset exists between the time at which the first thermal image is recorded and the time at which the second thermal image is recorded, the temporal offset being below an established threshold; and a radiometric precision of the first thermal image is higher than a radiometric precision of the second thermal image; and a spatial resolution of the second thermal image is higher than a spatial resolution of the first thermal image;
- determining, for a first pixel group of the second thermal image, the first pixel group being spatially associated with the territory, the first pixel group comprising a plurality of pixels, a measured value offset of the first pixel group by way of a comparison of relative measured values of the pixels of the first pixel group of the second thermal image to the first measured value of the at least one pixel of the first thermal image, which is at least partially spatially associated with the first pixel group of the second thermal image (S203);

- determining corrected absolute measured values of the pixels of the first pixel group which are associated with the territory, based on the second measured values of the pixels of the first pixel group as well as the measured value offset (S204); and
- creating the precise heat map of the territory based on the corrected absolute measured values (S205).

2. A method according to claim 1, furthermore comprising determining land surface temperatures of the territory, based on the precise heat map and land surface models and/or emission models.

3. A method according to any one of the preceding claims, wherein the thermal images are infrared images.

4. A method according to any one of the preceding claims, wherein the spatial resolution of the second thermal image is at least one or two orders of magnitude higher than the spatial resolution of the second thermal image.

5. A method according to any one of the preceding claims, wherein the measured values are temperature values, and a radiometric deviation of the first thermal image per pixel is less than 2 K, and the radiometric deviation of the second thermal image is, on average, more than 2 K.

6. A method according to any one of the preceding claims, wherein the first thermal image was recorded by a recording device of the first satellite which was calibrated so as to increase the radiometric precision.

7. A method according to any one of the preceding claims, wherein the first thermal image was recorded by the recording device of a satellite which has calibration methods on board.

8. A method according to any one of the preceding claims, wherein the second thermal image was acquired by the acquisition device of a satellite weighing less than 1000 kg.

9. A method for determining a change of temperatures of a territory over a time period, comprising the following steps:

- determining a first heat map of the territory at a first point in time according to the method according to any of claims 1 to 8, using a first and a second received thermal image;
- determining a second heat map of the territory at a second point in time according to the method according to any of claims 1 to 8, using a third and a fourth received thermal image,
- creating a time series of the temperature of the territory based on the first and second heat maps.

10. The method according to claim 9, wherein the first and second points in time are within an established time period, and the first and third thermal images each have a higher radiometric precision than the second and fourth thermal images and were each recorded by a first satellite platform which has calibration methods on board, the second thermal image has a higher spatial resolution than the first and third thermal images and was recorded by the recording device of a second satellite, and the fourth thermal image has a higher spatial resolution than the first and third thermal images and was recorded by the recording device of a third satellite, the second and third satellites being different satellites weighing less than 1000 kg.

11. The method according to claim 9 or 10, furthermore comprising the following steps:

- determining a plurality of additional heat maps of the territory at additional points in time, wherein two consecutive points in time of the additional points in time are in each case within an established time period; and
- creating a time series of the temperature of the territory based on the first heat map, the second heat map, and the additional heat maps.

12. A computer program product for determining a heat map of a territory, wherein the computer program product includes instructions that, when executed on a computer, carry out the method according to any of claims 1 to 11.

13. A device (101) for creating a heat map of a territory, comprising:

- at least one receiving unit (102) configured to

receive a first thermal image of a first landscape encompassing the territory, which was recorded by a recording device of a first satellite (104), wherein the first thermal image comprises pixels that are spatially associated with the territory, and the thermal image, pixel by pixel, assigns a respective first measured value to the territory,

receive a second thermal image of a second landscape encompassing the territory, which was recorded by a recording device of a second satellite (105), wherein the second thermal image comprises pixels that are spatially associated with the territory, and the thermal image, pixel by pixel, assigns a second measured value to the territory,

wherein a temporal offset exists between the time at which the first thermal image is recorded and the time at which the second thermal image is recorded, the temporal offset being below an established threshold; and a radiometric precision of the first thermal image is higher than a radiometric precision of the second thermal image; and a spatial resolution of the second thermal image is higher than a spatial resolution of the first thermal image;

- a determination unit (103) configured to

determine, for a first pixel group of the second thermal image, the first pixel group being spatially associated with the territory, the first pixel group comprising a plurality of pixels, a measured value offset of the first pixel group by way of a comparison of relative measured values of the pixels of the first pixel group to the first measured value of the at least one pixel of the first thermal image, which is at least partially spatially associated with the first pixel group of the second thermal image;

determine corrected absolute measured values of the pixels of the first pixel group, based on the second temperature values of the pixels of the first pixel group as well as the measured value offset; and

create the heat map of the territory based on the corrected absolute measured values.

## Revendications

1.  Procédé d'établissement d'une carte thermique d'une région, comprenant les étapes suivantes :

    - la réception d'une première image thermique d'un premier paysage comprenant la région, laquelle a été prise par un dispositif de prise de vue d'un premier satellite (104), dans lequel la première image thermique comprend des pixels qui sont associés dans l'espace à la région et l'image thermique est respectivement associée pixel par pixel à une première valeur de mesure (S201) ;
    - la réception d'une deuxième image thermique d'un deuxième paysage comprenant la région, laquelle a été prise par un dispositif de prise de vue d'un deuxième satellite (105), dans lequel la deuxième image thermique comprend des pixels qui sont associés dans l'espace à la région et l'image thermique est respectivement associée pixel par pixel à une deuxième valeur de mesure (S202) ;
    - dans lequel il y a un décalage dans le temps en-dessous d'un intervalle fixé entre la prise de vue de la première image thermique et la prise de vue de la deuxième image thermique ; et une précision radiométrique de la première image thermique est supérieure à une précision radiométrique de la deuxième image thermique ; et une résolution spatiale de la deuxième image thermique est supérieure à une résolution spatiale de la première image thermique ;
    - la détermination d'un décalage de valeurs de mesure d'un premier groupe de pixels associés spatialement à la région de la deuxième image thermique, dans lequel le premier groupe de pixels comprend une multiplicité de pixels, par une comparaison de valeurs de mesure relatives des pixels du premier groupe de pixels de la deuxième image thermique par rapport à la première valeur de mesure de l'au moins un pixel de la première image thermique qui est associée dans l'espace au moins partiellement au premier groupe de pixels de la deuxième image thermique (S203),
    - la détermination de valeurs de mesure absolues corrigées des pixels du premier groupe de pixels associés à la région en se basant sur les deuxièmes valeurs de mesure des pixels du premier groupe de pixels ainsi que sur le décalage des valeurs de mesure (S204) ; et
    - l'établissement de la carte thermique précise de la région sur les fondements des valeurs de mesure (S205) absolues corrigées.

2.  Procédé selon la revendication 1, comprenant en outre, une détermination de températures de surface de la région se basant sur la carte thermique précise et de modèles de surfaces et/ou des modèles d'émission.

3.  Procédé selon l'une des revendications précédentes, dans lequel les images thermiques sont des images infrarouges.

**4.** Procédé selon l'une des revendications précédentes, dans lequel la résolution spatiale de la deuxième image thermique est au moins supérieure d'un ordre de grandeur d'une à deux fois à la résolution spatiale de la deuxième image thermique.

**5.** Procédé selon l'une des revendications précédentes, dans lequel les valeurs de mesure sont des valeurs de température et un décalage radiométrique de la première image thermique est inférieur à 2K par pixel et le décalage radiométrique de la deuxième image thermique se situe au-dessus de 2K en moyenne.

**6.** Procédé selon l'une des revendications précédentes, dans lequel la première image thermique a été prise par un dispositif de prise de vue étalonné pour une augmentation de la précision radiométrique du premier satellite.

**7.** Procédé selon l'une des revendications précédentes, dans lequel la première image thermique a été prise par le dispositif de prise de vue d'un satellite, qui dispose de méthodes d'étalonnage à bord.

**8.** Procédé selon l'une des revendications précédentes, dans lequel la deuxième image thermique a été prise par le dispositif de prise de vue d'un satellite ayant un poids inférieur à 1000 kg.

**9.** Procédé de détermination d'une modification de températures d'une région sur un intervalle de temps, comportant les étapes suivantes :

- la détermination d'une première carte thermique de la région à un premier instant d'après le procédé selon l'une des revendications 1 à 8 moyennant l'emploi d'une première et d'une deuxième image thermique reçue ;
- la détermination d'une deuxième carte thermique de la région à un deuxième instant d'après le procédé selon l'une des revendications 1 à 8 moyennant l'emploi d'une troisième et d'une quatrième image thermique reçue,
- l'établissement d'une évolution dans le temps de la température de la région en se basant sur les première et deuxième cartes thermiques.

**10.** Procédé selon la revendication 9, dans lequel les premier et deuxième instants se situent dans un intervalle de temps fixé et la première et la troisième image thermique possèdent respectivement une précision radiométrique supérieure aux deuxième et quatrième images thermiques et ont été prises respectivement par une première plateforme de satellite qui dispose de méthodes d'étalonnage à bord, la deuxième image thermique a une résolution spatiale plus élevée que les première et troisième images thermiques et a été prise par le dispositif de prise de vue d'un deuxième satellite, et la quatrième image thermique a une résolution spatiale plus élevée que les première et troisième images thermiques et a été prise par le dispositif de prise de vue d'un troisième satellite, où les deuxième et troisième satellites sont des satellites différents avec un poids inférieur à 1000 kg.

**11.** Procédé selon la revendication 9 ou la revendication 10, comprenant en outre les étapes suivantes :

- la détermination d'une multiplicité de cartes thermiques supplémentaires de la région à des instants supplémentaires, où respectivement deux instants consécutifs parmi les instants supplémentaires se situent respectivement dans un intervalle de temps fixé, et
- l'établissement d'une évolution dans le temps de la température de la région en se basant sur la première carte thermique, la deuxième carte thermique et les cartes thermiques supplémentaires.

**12.** Produit-programme informatique permettant la détermination d'une carte thermique d'une région, où le produit-programme informatique comprend des instructions, qui lorsqu'elles sont exécutées sur un ordinateur exécutent le procédé selon l'une des revendications 1 à 11.

**13.** Dispositif (101) d'établissement d'une carte thermique d'une région comprenant

- au moins une unité réceptrice (102) conçue pour

la réception d'une première image thermique d'un premier paysage comprenant la région, lequel a été pris par un dispositif de prise de vue d'un premier satellite (104), dans lequel la première image thermique comprend des pixels, qui sont associés dans l'espace à la région et l'image thermique est respectivement associée pixel par pixel à une première valeur de mesure,
la réception d'une deuxième image thermique d'un deuxième paysage comprenant la région, lequel a été pris par un dispositif de prise de vue d'un deuxième satellite (105), dans lequel la deuxième image thermique comprend des pixels, qui sont associés dans l'espace à la région et la deuxième image thermique est respectivement associée pixel par pixel à une deuxième valeur de mesure,

dans lequel il y a un décalage dans le temps en-dessous d'un intervalle fixé entre la prise de vue de la première image thermique et la prise de vue de la deuxième image thermique ; et une précision radiométrique de la première image thermique est supérieure à une précision radiométrique de la deuxième image thermique ; et une résolution spatiale de la deuxième image thermique est supérieure à une résolution spatiale de la première image thermique ;

- une unité de détermination (103) conçue pour

la détermination d'un décalage de valeurs de mesure d'un premier groupe de pixels de la deuxième image thermique associés spatialement à la région, dans lequel le premier groupe de pixels comprend une multiplicité de pixels, par une comparaison de valeurs de mesure relatives des pixels du premier groupe de pixels par rapport à la première valeur de mesure de l'au moins un pixel de la première image thermique, qui est associée dans l'espace au moins partiellement au premier groupe de pixels de la deuxième image thermique ;

la détermination de valeurs de mesure absolues corrigées des pixels du premier groupe de pixels en se basant sur les deuxièmes valeurs de mesure de température des pixels du premier groupe de pixels ainsi que sur le décalage des valeurs de mesure ;

l'établissement de la carte thermique de la région sur les fondements des valeurs de mesure absolues corrigées.

**Fig. 1**

**Fig. 2**

Fig. 3A

Fig. 3B

Satellit A

Satellit B

Fig. 4C

Fig. 4B

Fig. 4A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003152292 A1

**In der Beschreibung aufgeführte Nicht-Patentliteratur**

- A Temperature and Emissivity Separation algorithm for Advanced Spaceborne Thermal Emission and Reflection radiometer ASTER images. **GILLESPIE, A. R ; ROKUGAWA, S ; MATSUNAGA, T ; COTHERN, J. S ; HOOK, S ; KAHLE, A. B.** IEEE Transactions on Geoscience and Remote Sensing. 1998, vol. 36, 1113-1126
- **VALOR, E. ; CASELLES, V.** Mapping Land Surface Emissivity from NDVI: Application to European, African and South American Areas. *Remote Sensing of Environment,* 1996, vol. 57, 167-184, http://dx.doi.org/10.1016/0034-4257(96)00039-9
- **SPINHIRNE et al.** Performance and results from a space borne, uncooled microbolometer array spectral radiometric imager. *Aerospace Conference Proceedings,* 2000, ISBN ISBN: 978-0-7803-5846-1, 125-134
- **GWINNER et al.** The High Resolution Stereo Camera (HRSC) of Mars Express and ist approach to science analysis and mapping for Mars and ist satellites. *Planetary and Space Science,* vol. 126, ISSN ISSN: 0032-0633, 93-138